Europäisches Patentamt

European Patent Office

Office européen des brevets

(19)

(11) Veröffentlichungsnummer: **0 123 015**
**A2**

(12) **EUROPÄISCHE PATENTANMELDUNG**

(21) Anmeldenummer: **84100378.3**

(22) Anmeldetag: **16.01.84**

(51) Int. Cl.³: **A 23 G 1/12**
**A 23 G 1/04**

(30) Priorität: **21.04.83 IT 2071883**

(43) Veröffentlichungstag der Anmeldung:
**31.10.84 Patentblatt 84/44**

(84) Benannte Vertragsstaaten:
**AT BE CH DE FR GB LI LU NL SE**

(71) Anmelder: **CARLE & MONTANARI S.p.A.**
**Via Neera 39**
**I-20141 Milano(IT)**

(72) Erfinder: **Ripani, Sergio**
**Via G. da Cermenate 35/A**
**I-20141 Milano(IT)**

(74) Vertreter: **de Dominicis, Riccardo et al,**
**de Dominicis & Partners S.a.s. Via Brera, 6**
**I-20121 Milano(IT)**

(54) **Vorrichtung zur Regelung und Überwachung der Dicke des hergestellten Schokoladenfilms bei Walzenreibmaschinen für Schokolade und dgl.**

(57) Eine Vorrichtung zur Regelung und Uebewachung der Dicke des hergestellten Schokoladenfilms (27) bei Walzenreibmaschinen fuer Schokolade und dgl., bei der die Regelung der Dicke durch Eingreifen im Regelsystem zum Verstellen des Lagerdrucks der Reibwalzenlager der Walzenreibmaschinenwalzen unter Benutzung von Steuersignalen stattfindet, die von einer indirekten Messung der augenblicklichen Dicke des Schokoladenfilms (27) erhalten werden, wobei die Messung durch Verarbeitung von kolorimetrischen Signalen durchgefuehrt wird, die bei einer gegebenen zu raffinierenden Ausgangsmasse von Schokolade entsprechende Dicken darstellen und von einem kolorimetrischen Leserkopf (10) abgegeben werden. Der kolorimetrische Lesekopf (10) ist hin- und herbewegbar vorgesehen, um eine Messung des Films auf seiner gesamten Breite durchzufuehren. Der Lesekopf (10) zur optischen Ablesung gibt auch die Moeglichkeit, die Lueckenlosigkeit des abgelieferten Schokoladenfilms zu ueberwachen, d. h. das Vorhandensein von etwaigen sogenannten "trockenen Bahnen" auf der letzten Reibwalze zu erfassen. Wenn Ursachen entstehen, die ueblicherweise zum Fressen der Walzenreibmaschinenwalzen fuehren, wird die Walzenreibmaschine nach einer voreingestellten Regelzeit durch die Vorrichtung automatisch abgestellt.

./...

FIG.2

DRUCKLUFT

.1

Carle & Montanari S.p.A.

Via Neera 39

201 41 Mailand / Italien

Vorrichtung zur Regelung und Ueberwachung der Dicke des hergestellten Schokoladenfilms bei Walzenreibmaschinen fuer Schokolade und dgl.

Die vorliegende Erfindung bezieht sich auf eine Vorrichtung zur Regelung sowie Ueberwachung der Dicke des hergestellten Schokoladenfilms bei Walzenreibmaschinen fuer Schokolade und dgl.

Wie bekannt, bestehen die Walzenreib- bzw. Raffiniermaschinen fuer Schokolade im wesentlichen aus einer Vielzahl von Reib- bzw. Raffinierwalzen, die in einem Lagerungsgestell in Reihenfolge angeordnet und gegenseitig verschiebbar gelagert sind, um den durch den laufenden Schokoladenfilm gebildeten jeweiligen Spalt zwischen jeweils zwei gegenueberliegenden Reibwalzen regeln zu koennen. Dabei verringert sich der durch den mitgenommenen Schokoladenfilm bewirkte Walzenabstandspalt fortlaufend von dem ersten Eingabewalzenpaar, dessen Reibwalzen zur Bildung eines Eingaberaums trichterartig nebeneinanderliegend vorgesehen sind, bis zum letzten Reibwalzenpaar, wobei die letzte Reibwalze die Austragswalze darstellt. Um diese Austragswalze zum groessten Teil ihres Umfanges, z. B. um Dreiviertel desselben herum, wickelt sich der hergestellte Schokoladenfilm, der durch ein der Austragswalze zugeordnetes Abfuehrblech diese Walze verlaesst. Die geforderten Dicken der Schokoladenfilme koennen sich in weiten Grenzen aendern, wobei im allgemeinen Dickenwerte im Bereich von etwa 15 bis 30 $\mu$m erwuenscht werden. Es handelt sich deshalb um aeusserst duenne Dicken, die praktisch von den Dicken der Festteilchen aus Kakao, Zucker, Milch usw., die im Schokoladenfilm enthalten sind, bestimmt werden, wobei der Film bekannterweise aus einem Gemisch von Kakao, Zucker, fettiger Substanz, d. h. Kakaobutter, Milch u. dgl. besteht. Dabei handelt es sich um eine andersartige Mischung, wobei die Verteilung der einzelnen Zutaten pro Flaecheneinheit im hergestellten duennen Schokoladenfilm zufaelligerweise veraenderlich und unregelmaessig ist. Bei den bekannten Reibwalzenmaschinen nimmt die Geschwindigkeit der nach dem ersten Eingabewalzenpaar angeordneten Reibwalzen in Richtung zur Austragwalze jeweils zu. Dies fuehrt zur gewuenschten Zusammenpressungs- und Mitnahmewirkung auf die Schokoladenmasse zur Bildung eines Schokoladenfilms herbei, dessen Dicke, wie oben erwaehnt, allmaehlich in Richtung zur Austragswalze immer kleiner wird.

Um den ungewuenschten Dickenabweichungen im hergestellten Schokoladenfilm wirksam entgegenzuwirken, ist bei den bekannten Walzenreibmaschinen die Moeglichkeit, die Lagerdruecke der Reibwalzen zu aendern, vorgesehen, und zwar zwischen dem Eingabewalzenpaar und den dem letzteren nachgeordneten Reibwalzen. Dafuer bestehen im allgemeinen zwei Loesungen: bei der ersten wird eine Druckaenderungswirkung auf die gesamten Lager der Reibwalzen ausgeuebt, bei der zweiten wird diese Druckaenderungswirkung jeweils auf die einzelnen Lager der Raffinierwalzen ausgeuebt, wobei die zweite Loesung die Moeglichkeit bietet, die Lagerdruecke zwischen den jeweiligen Lagern einzeln abzuaendern. Die hauptsaechliche Regelung tritt jedenfalls am Eingabewalzenpaar auf, weil die zugefuehrte Menge der Schokoladenmasse pro Zeiteinheit bei laufender Walzenreibmaschine derselben gewichtsmaessigen Menge des hergestellten Schokoladenfilms entsprechen soll. Es wird von einer naeheren Beschreibung der Regelsysteme zum Verstellen der Reibwalzen-Lagerdruecke deshalb abgesehen, weil die vorgeschlagene Vorrichtung gleichgeltend bei den gesamten Regelsystemen einsetzbar ist.

Bei allen bekannten Raffiniermaschinen, unabhaengig von deren mehr oder weniger hochentwickelten Ausfuehrungen ihrer Walzenlagerdruckregelsysteme, besteht das Problem bezueglich der tatsaechlichen Messung der Dicke des hergestellten Schokoladenfilms. Diese zur Zeit unausfuehrbare Messung ist jedoch stark erwuenscht, da die Gleichmaessigkeit der Schokoladenschichtdicke fuer eine einwandfreie Weiterbearbeitung der aus dem Schokoladenfilm bestehenden raffinierten Schokoladenmasse unentbehrlich ist.

Da es jedoch nicht moeglich ist, die Dicke des Schokoladenfilms direkt zu messen, weil derselbe einerseits eine sehr duennfluessig-teigige Konsistenz aufweist, und andererseits er sich in Bewegung auf einer Transportflaeche (Austragswalze) befindet, wird bisher die Dicke bzw. Feinheit des Schokoladenfilms im Labor kontrolliert, indem eine Siebanordnung entsprechend den von OICC kodifizierten, spezifischen Vorschriften verwendet wird. Diese Loesung ist jedoch deshalb als nicht zufriedenstellend zu betrachten, weil sie einerseits keine staendige Messung ermoeglicht und andererseits, erst nach einer laengeren Zeit, in der Groessenordnung von vielen Stunden, die Messungsergebnisse liefert.

In der Tat befinden sich bei den Produktionsbetrieben diese Laboratorien im allgemeinen von den Fertigungsstaetten weit entfernt und die Durchfuehrung der Messung selbst nimmt eine wesentlich lange Zeit in Anspruch. Ferner, wenn die Messresultate dazu zwingen, regelnd einzugreifen, und diese Regelungen anschliessend ausgefuehrt worden sind, die allerdings in empirischer Weise erfolgen, ist es sowieso erforderlich eine Kontrollmessung wieder durchzufuehren, um die guten Resultate dieses Eingreifens nachzupruefen. Dadurch, dass solche Korrekturvorgaenge normalerweise mehrere Eingriffe benoetigen, ist der Zeitaufwand fuer diese Korrekturen selbstverstaendlich sehr gross und demzufolge wird in der Zwischenzeit ebenfalls eine grosse Schokoladenmenge, deren Feinheit vom jeweiligen Nennwert abweicht, abgeliefert.

Bei den bekannten Raffiniermaschinen ist es ausserdem notwendig, dass der Bedienungsmann den Lauf der Raffiniermaschine staendig ueberwacht, um zu vermeiden, dass feste Bruchstuecke, wie z. B. die sogenannten "Milchplatten" oder etwa Bruchstuecke von Trockenobstschalen, die zufaellig in die zu raffinierende Schokoladenmasse hineingefallen sind, das bekannte schwerwiegende Fressen der Raffiniermaschine selbst verursachen koennen. Diese Festkoerper gelangen in Wirklichkeit zuerst mit den Eingaberollen in Beruehrung und, wenn sie nicht durchgelassen und mitgerissen werden, stellen sie sich zwischen den Rollen fest und verhindern an dieser Stelle den Eingang der Schokoladenmasse durch die Eingabewalzen hindurch, mit nachfolgender Bildung auf die Eingaberollen sowie auf alle Raffinierwalzen von Umfangsbahnen ohne Produkt, d.h. von den sogenannten "trockenen Umfangsbahnen", mit einer Breite von mehreren mm. An den Stellen, wo diese "trockenen Umfangsbahnen" erscheinen, treten bekannterweise rasch starke Ueberhitzungen der Reibwalzen auf, woraus sich oertliche Waermedehnungen an diesen Stellen ergeben, d. h. wo die Reibwalzen gerade in gegenseitiger Beruehrung stehen. Daraus resultiert sehr schnell eine weitere Ueberhitzung, die auf die verschiedenen Drehgeschwindigkeiten der Reibwalzen zurueckzufuehren ist, und schliesslich nach einigen Minuten, das Fressen der betreffenden Reibwalzen.

Die der vorliegenden Erfindung zugrunde liegende Aufgabe besteht darin, eine Vorrichtung fuer Schokoladenraffiniermaschinen vorzuschlagen, die imstande ist, ein automatisches Eingreifen zur Beeinflussung des Lagerdrucks der Raffiniermaschinenwalzen zu ermoeglichen, um eine gleichmaessige Dicke des abgelieferten Schokoladenfilms auf seiner gesamten Breite sicherzustellen.

Im Rahmen der angegebenen Aufgabe soll die vorgeschlagene Vorrichtung ferner eine staendige Ueberwachung der Lueckenlosigkeit des abgelieferten Schokoladenfilms ebenfalls erlauben und nach Erfassung einer Luecke im Schokoladenfilm bzw. einer "trockenen Umfangsbahn" auf der Austragswalze, das Eingreifen, das Eingreifen einer Sicherheitsmassnahme, d. h. einer Massnahme zum Selbstschutz der Walzenreibmaschine, veranlassen.

Die der vorliegenden Erfindung zugrunde liegende Aufgabe wird durch eine erfindungsgemaesse Vorrichtung zur Regelung sowie Ueberwachung der Schokoladenfilmdicke bei Schokoladenraffiniermaschinen, die dadurch gekennzeichnet ist, dass sie folgende Mittel umfasst:

- Erfassungsmittel, die faehig sind, die kolorimetrischen Signale des ausgetragenen Schokoladenfilms zu ermitteln;

- Umformungsmittel, die faehig sind, obige kolorimetrische Signale in digital verarbeitbare Signale zu verwandeln;

- Einstellmittel zum Einstellen von Bezugssignalen, die elektronisch verarbeitbar sind und entsprechende Dicken-Nennwerte des ausgetragenen Schokoladenfilms darstellen, sowie

0123015

- Verarbeitungs- und Vergleichsmittel zum Vergleichen der aus den kolorimetrischen Signalen verarbeitbaren Signale mit den einstellbaren Bezugssignalen, wobei die Verarbeitungs- und Vergleichsmittel faehig sind, Ausgangssignale abzugeben, die als Eingreif- bzw. Steuersignale im Regelkreislauf der seitlichen Lager der Maschinenraffinierwalzen Verstellungen dieser Raffinierwalzen veranlassen, welche Verstellungen die gegenueber dem eingestellten Nennwert gegebenenfalls eintretenden Dickenabweichungen des ausgetragenen Schokoladenfilms kompensieren.

Eine weitere erfindungsgemaesse Loesung fuer die vorgeschlagene Vorrichtung ist dadurch gekennzeichnet, dass die Erfassungsmittel zur Ermittlung von kolorimetrischen Signalen des abgelieferten Schokoladenfilms aus einer kolorimeterartigen Einrichtung besteht, waehrend die Mittel, die die kolorimetrischen Signale in verarbeitbare Signale umformen, aus einem optisch-digitalen Umsetzer bestehen, dem alternierend Folgen von kolorimetrischen Signalen der augenblicklichen Farbe des abgelieferten Schokoladenfilms und von einer Bezugsfarbe zugefuehrt werden.

Erfindungsgemaess wird ferner vorgeschlagen, dass der kolorimeterartige Lesekopf auf Transportmitteln gelagert ist, die entlang der Breite der Schokoladenfilm-Austragwalze hin- und herbeweglich sind, um die augenblickliche Farbe ueber die gesamte Breite dieses ausgetragenen Schokoladenfilms abzutasten, d. h. rechtzeitig das Vorhandensein von gegebenenfalls eintretenden "trockenen Bahnen" auf der Austragrolle bzw. Luecken im Schokoladenfilm zu ermitteln.

Weitere Merkmale der erfindungsgemaessen Vorrichtung sind den in den Kennzeichen der nachfolgenden Unteransprueche angegebenen Eigenschaften entnehmbar.

Erfindungsgemaess wurde ueberraschenderweise festgestellt, dass ein direkt proportionaler Zusammenhang zwischen den verschiedenen Dicken des Schokoladenfilms (einer bestimmten zu raffinierenden Ausgangsmasse oder -zusammensetzung) und den Gesamtfarben
desselben bei den gleichen Dicken besteht.

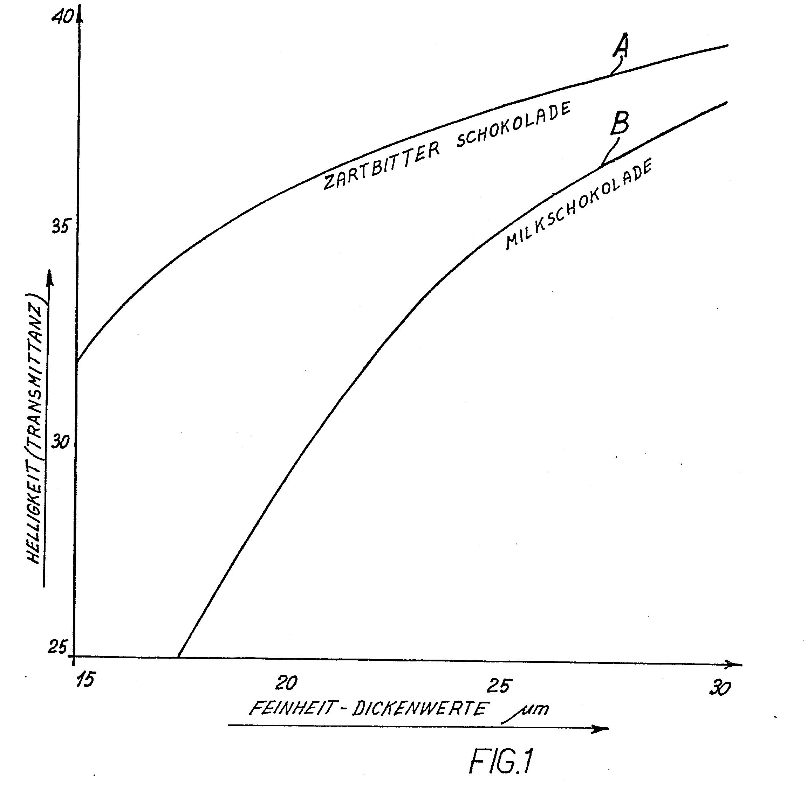

In Fig. 1 der beiliegenden Zeichnungen sind beispielsweise zwei Kurven eingezeichnet, die den Zusammenhang zwischen Helligkeit (Transmittanz) und Feinheit von zwei Schokoladensorten bei verschiedenen Dicken darstellen, wobei die Kurve A sich auf eine Zartbitter-Schokolade und die Kurve B auf eine Milchschokolade bezieht. Zur Durchfuehrung der Versuche wurde ein Kolorimeter Hunterlab (hergestellt von Hunter Associates Laboratory, Inc. von Reston, Virginia, U.S.A.), sowie ein Grindometer verwendet. Wie bekannt, gibt der Kolorimeter Hunterlab einen Zahlenwert der Helligkeit oder Transmittanz bzw. einen Reflexionsfaktor nach einer internationalen Normung in bezug auf einen Masstab zwischen 0 (schwarze Farbe) und 100 (weisse Farbe) an. Die Transmittanz stellt die Differenz zwischen der eine farbige Flaeche beaufschlagender Lichtmenge und der von dieser farbigen Flaeche zurueckgeworfener bzw. reflektierter Lichtmenge dar. Der Grindometer war mit zwei verschiedenen Rillen je mit einer Tiefe von 0 bis 50 $\mu$m bzw. von 50 bis 200 $\mu$m versehen. Die Schokoladenmasse wurde im plastischen Zustand bei einer Temperatur von 40°C auf den Grindometer bestrichen. Der Grindometer wurde unter dem Kolorimeter untergebracht, und es wurden Schokoladenfarbenmessungen durchgefuehrt, die den verschiedenen Dickenabstufungen der Grindometer-Skala entsprachen. Die Verbindung der jeweils abgelesenen und im Diagramm aufgetragenen Punkte Farbe/Dicke miteinander ergibt die eingezeichneten Kurven. Aus diesen Kurven ist leicht zu ersehen, dass bei einem Dickenbereich von 15 bis 30 $\mu$m die Dickezunahme der Transmittanzzunahme im wesentlichen proportional ist und umgekehrt.

Um eine Messung, auch wenn sie auf indirekte bzw. mittelbare Weise der Dicke des abgelieferten Schokoladenfilms auf der gesamten Filmbreite durchfuehren zu koennen, wird vorteilhafterweise nach der Erfindung eine kontinuierliche Hin- und Herlesung auf der ganzen Austragswalzenbreite vorgesehen. Dadurch wird der ganz wesentliche Vorteil erzielt, dass bei dieser erfindungsgemaessen Hin- und Herlesung bzw. Hin- und Herkontrolle gleichzeitig auch das eventuelle Vorhandensein der sogenannten "trockenen Bahnen" ermittelt wird, die, wie bereits erwaehnt, wenn nicht gleich entdeckt, zum Rollenfressen mit darauf folgender Ausserbetriebsetzung der Walzenreibmaschine und erheblichen Beschaedigungen fuehrt.

Ein weiterer Vorteil der vorliegenden Erfindung besteht in der einfachen Verwendung der ermittelten Ableseresultate, die in Form von kolorimetrischen bzw. optischen Signalen vorliegen, zur Erzeugung der auf den Lagerdruck der Reibwalzen einwirkenden Steuer- bzw. Eingreifsignale.

Ein weiterer Vorteil der vorgeschlagenen Loesung wird noch darin angesehen, dass der Betrieb der Walzenreibmaschine in einfacher und zuverlaessiger Weise automatisiert werden kann.

Noch ein Vorteil besteht in der Moeglichkeit, mehrere den verschiedenen Farben, d. h. Dicken oder Feinheiten, der abgelieferten Schokoladenfilme entsprechende Werte zu speichern, so dass dieselben spaeter jederzeit beliebig wiederholt, d. h. eingestellt werden koennen. Ausserdem wird es durch die vorgeschlagene Loesung moeglich, eine Zentralsteuerung zu verwirklichen, d. h. gleichzeitig ueber ein und dieselbe erfindungsgemaesse Vorrichtung mehrere Walzenreibmaschinen zu ueberwachen.

Vorteilhafterweise greift die vorgeschlagene Vorrichtung zum Verstellen der Lagerdruecke der Reibwalzen in einer bestimmten, vorgegebenen Zeitspanne mehrmals ein, worauf die Raffiniermaschine, wenn die gewollte Dicke des Schokoladenfilms nicht wiederherstellbar ist, selbsttaetig durch Ergreifen einer Selbstschutzmassnahme ausser Betrieb gebracht wird, um Fressen an

0123015

Raffiniermaschinenwalzen zu vermeiden. Dieses Eingreifen tritt beispielsweise jedesmal dann auf, wenn die eingangs genannten "trockenen Bahnen" erfasst werden und auch die sogenannte Offenstellung der Walzen des Eingabewalzenpaars nicht ausreicht, die Ursachen der Bildung der erfassten "trockenen Bahnen" zu beseitigen. Dadurch wird eine wichtige Betriebssicherheit, d. h. der Selbstschutz der Walzenreibmaschine gewaehrleistet, und dies unabhaengig von der Anwesenheit eines Bedienungsmannes.

Des weiteren ist ein Vorteil der erfindungsgemaessen Vorrichtung darin zu sehen, dass eine einwandfreie und zuverlaessige Betriebsweise bei einfachem und platzsparendem Aufbau erreicht werden kann.

Weitere Merkmale, Vorteile und Einzelheiten der erfindungsgemaessen Vorrichtung ergeben sich aus der nachfolgenden Beschreibung anhand der beiliegenden Zeichnungen, die rein schematisch und in nicht einschraenkender Weise bevorzugte Ausfuehrungsbeispiele darstellen.

Es zeigen:
Fig. 1 ein Diagramm, enthaltend zwei Kurven, die den proportionalen Zusammenhang zwischen Farbe und Dicke der Schokoladenfilme deutlich darstellen , und zwar Kurve A fuer Zartbitter-Schokolade und Kurve B fuer Milchschokolade, wobei das Diagramm auf der Abszisse die Feinheitswerte , d. h. Dickenwerte in $\mu$m und auf der Ordinate die Helligkeitswerte zeigt ;

Fig. 2 eine prinzipielle Ansicht der erfindungsgemaessen Vorrichtung bei der Ausfuehrung mit Handsteuerung;

Fig. 3 eine Fig. 2 aehnliche Ansicht einer erfindungsgemaessen Vorrichtung, jedoch in der Ausfuehrung mit automatischer und zentralisierter Steuerung;

Fig. 4 eine schematische Ansicht von vorne einer Walzenreibmaschine mit zugeordneter erfindungsgemaesser Vorrichtung;

Fig. 5 eine schematische Seitenansicht der Walzenreibmaschine von Fig. 4.

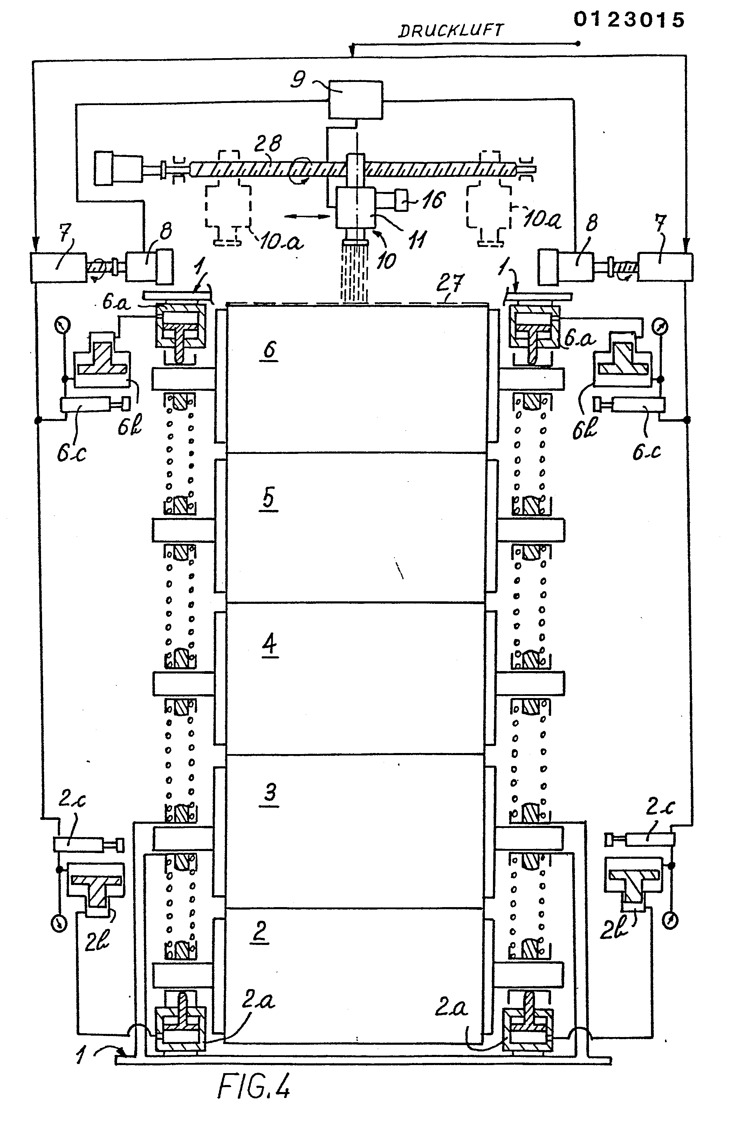

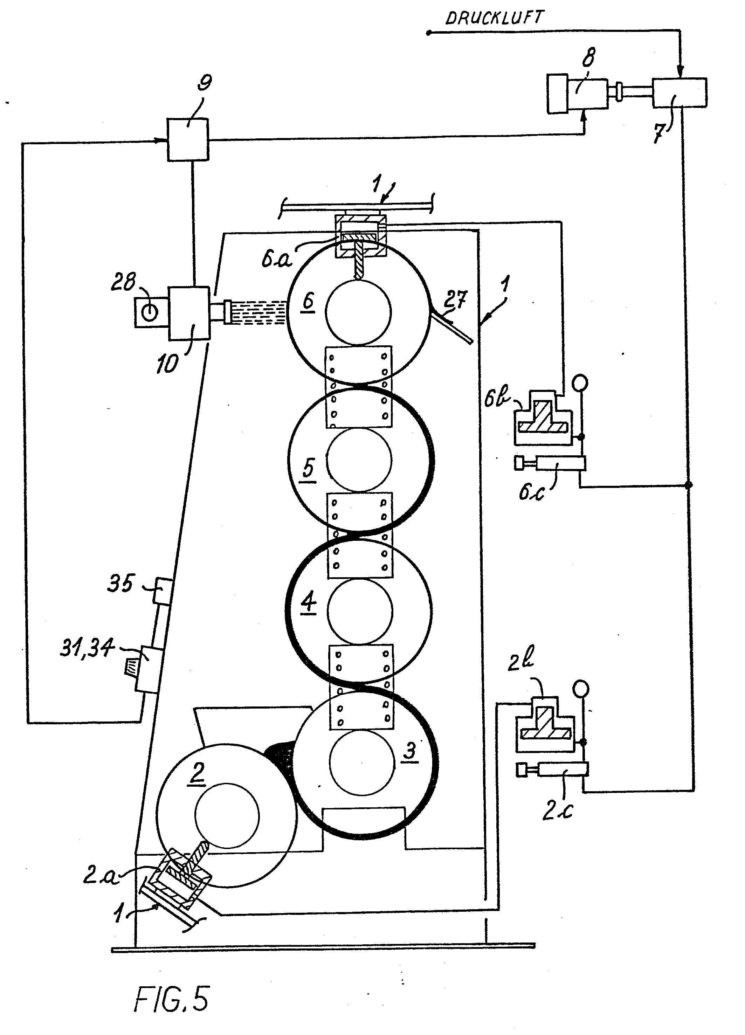

In den verschiedenen Figuren sind einander entsprechende Teile mit gleichen Bezugszeichen versehen. Wie aus Fig. 4 und 5 besonders ersichtlich ist, weist die dargestellte Walzenreib- bzw. Raffiniermaschine ein mit 1 bezeichnetes, schematisch dargestelltes Gehaeuse auf, in welchem eine Mehrzahl Reibwalzen gelagert sind, wobei im Ausfuehrungsbeispiel fuenf Raffinierwalzen angedeutet und mit den Bezugszeichen 2 bis 6 bezeichnet sind. Wie schematisch angedeutet, ist die Reibwalze 3 drehbar, aber unverschiebbar gelagert, waehrend die Reibwalzen 4 und 5 federnd gelagert sind, und den Lagern der Endwalzen, d. h. den Reibwalzen 2 und 6, an beiden Seiten ist je ein Kolben/Zylinder—Antrieb 2a bzw. 6a zugeordnet, welche Antriebe beispielsweise ueber Druckuebersetzer 2b, 6b steuerbar sind, die wiederum den Regelelementen 2c, 6c zugeordnet sind. Diese Regelelemente 2c, 6c liegen in einem Kreislauf des Regelsystems zum Verstellen des Drucks der zugeordneten Walzenlager, wie es beispielsweise in Fig. 4 angedeutet ist. Mit 7 sind Stellelemente bezeichnet, die je einem zugehoerigen Wandler bzw. Steuerglied 8 zugeordnet sind. Diese Wandler sind an eine Datenverarbeitungsanlage 9 angeschlossen, welche im folgenden naeher beschrieben wird, und die wiederum an einen optischen Lesekopf 10 angeschlossen ist. Dieser umfasst in einem Gehaeuse 11 einen nach Art eines Kolorimeters ausgebildeten Teil 12 und einen Umsetzer 13 zur Umwandlung von optischen bzw. kolorimetrischen Signalen in elektrische Signale. In der Folge wird man auf diesen letzteren wieder zurueckkommen.

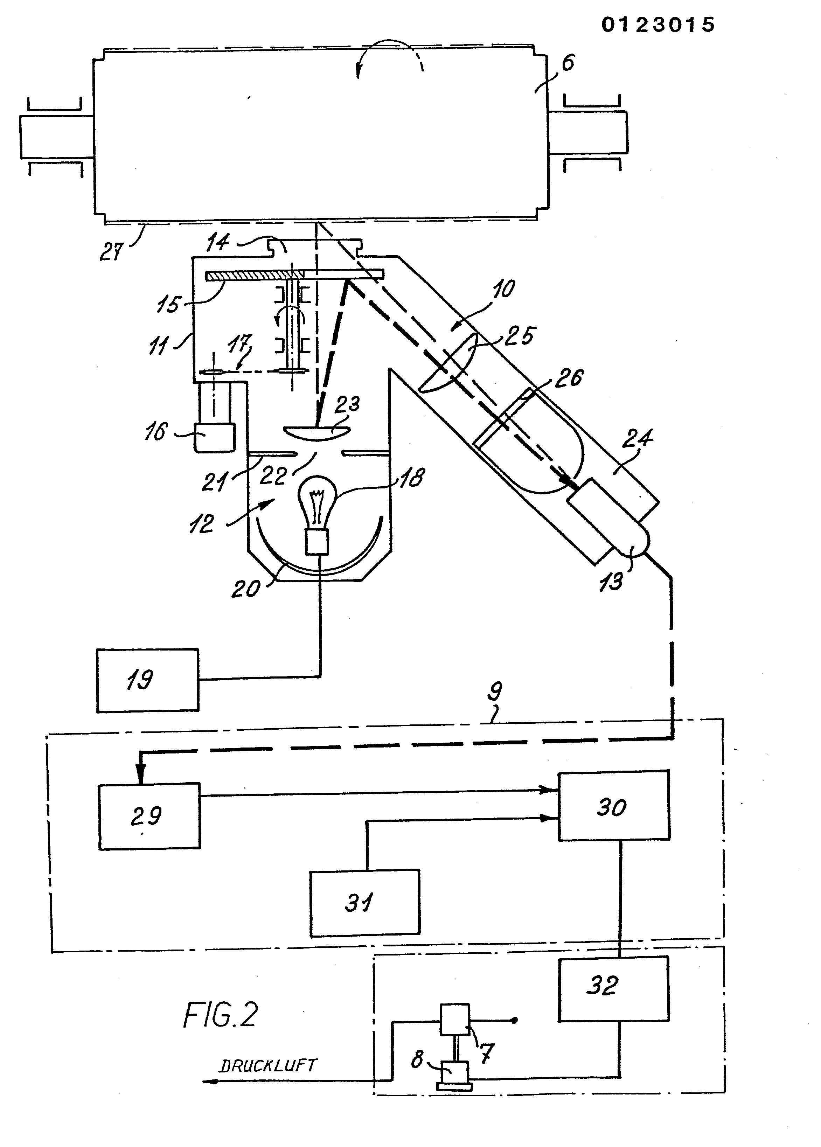

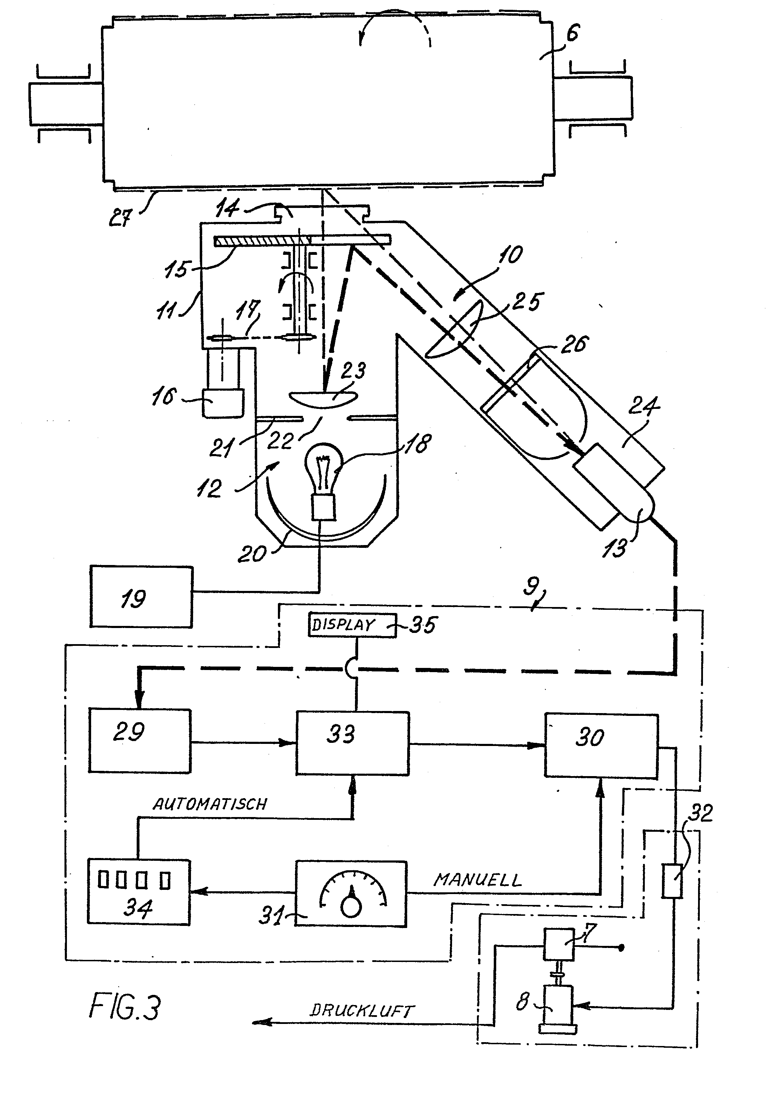

Das Gehaeuse 11 weist eine Ausnehmung 14 auf, in dessen Innern eine geschlitzte Scheibe 15 gelagert ist, die z. B. nach Art einer Malteserkreuzscheibe ausgebildet ist und unter Zwischenschaltung eines Getriebes 17 von einem Motor 16 angetrieben wird. Im Gehaeuse 11 ist ausserdem eine Lichtquelle 18 untergebracht, vorteilhafterweise in Form einer Gluehlampe, die durch eine elektrische Speiseeinrichtung 19 gespeist wird. Mit 20 ist ein Parabolspiegelelement zum Buendeln und Weiterleiten der Lichtstrahlung bezeichnet, wobei mit 21 eine Blende mit Zentraloeffnung 22 bezeichnet ist. Im Innern des Gehaeuses 11 ist ferner eine · mit 23 bezeichnete Linse ersichtlich. Im dargestellten Ausfuehrungsbeispiel weist das Gehaeuse 11 noch einen seitlichen Abschnitt 24 auf, in welchem sich der oben erwaehnte, optisch--elektrische Umsetzer 13 befindet, der vorteilhafterweise in Form einer Photodiode ausgebildet ist. Wie aus Fig. 2 und 3 ersichtlich, geht der seitliche Abschnitt 24 vom Gehaeuse 11 mit einer Neigung in Groessenordnung von 45° abfallend aus, der im gezeigten Beispiel eine Linse 25 und einen Filter 26 in sich aufnimmt.

Um die Dicke des abgelieferten Schokoladenfilms 27 auf seiner ganzen Breite zu messen, ist der Lesekopf 10 auf Transportmitteln angeordnet, die ihm eine hin- und hergehende Bewegung verleihen. Im vorliegenden Beispiel ist der Lesekopf 10 auf einer Schnecke 28 montiert, die in an sich bekannter und nicht naeher dargestellter Weise gelagert und drehbar antreibbar ist. Diese Schnecke ist ausserdem mit ebenfalls nicht gezeigten Endanschlagmitteln ausgeruestet, so dass der Lesekopf 10 zwei Hubende- bzw. Bewegungsumkehrstellungen 10a einnehmen kann.

Die in Fig. 2 dargestellte Datenverarbeitungsanlage 9 fuer Handeinstellungsbetrieb umfasst ein Signal-Dividierglied 29, ein Signal-Vergleichsglied 30 sowie eine Handeinstellungsvorrichtung 31 zur manuellen Voreinstellung der Digitalwerte, die jeweils den gewuenschten Schokoladenfilmdicken entsprechen. Mit 32 ist ein Wandler zur Umwandlung von Digitalsignalen in Analogsignale angedeutet bzw. in Steuersignale zum Verstellen des Lagerdrucks der Raffinierwalzen durch die den Stellelementen 7 zugeordneten Steuergliedern 8. Die Drucksteuersignale werden an das bzw. die Stellelemente , die sich auf der rechten und/oder linken Seite der Maschine befinden, durch Hilfe eines der Einfachheit halber nicht gezeichneten Umschalters weitergeleitet, der diese Weiterleitung je nach der Lage des Lesekopfs 10 auf die rechte oder linke Maschinenhaelfte bewirkt.

Die in Fig. 3 dargestellte Datenverarbeitungsanlage 9 fuer die automatisierte Arbeitsweise mittels einer Zentralsteuerung, ist zusaetzlich mit einem Mikroprozessor 33 sowie mit einer Tastatur 34 o. dgl. zur Eingabe des jeweils gewuenschten automatischen Arbeitsvorgangs versehen. Mit 35 ist ein Display bezeichnet.

Nachstehend wird die Arbeitsweise der vorgeschlagenen Vorrichtung kurz beschrieben.

Die von der Gluehlampe 18 ausgestrahlte Lichtstrahlung beleuchtet durch die Ausnehmung 22 und die Linse 23 hindurch sowohl die untere Flaeche der Vollsegmente der Malteserkreuzscheibe 15, die eine Bezugs-Schokoladenfaerbung traegt, als auch die aeussere Flaeche des auf der Austragsrolle 6 befindlichen Schokoladenfilms 27. Dabei werden zwei abwechselnde Lichtbuendel erzeugt, die aus dem vom Boden der Malteserkreuzscheibe 15 reflektierten Buendel bzw. aus dem vom Schokoladenfilm 27 reflektierten Buendel bestehen. Diese beiden Lichtbuendel stellen somit kolorimetrische bzw. optische Signale dar, wobei das eine eine Bezugswellenlaenge und das andere eine von der mittleren Gesamtfarbe des abgelieferten Schokoladenfilms 27 abhaengige Wellenlaenge aufweist. Nach Durchgang der Linse 25 und des Filters 26, wie im gezeigten Beispiel ersichtlich, gelangen diese optischen Signalfolgen an die Photodiode 13, die nach Umwandlung der erhaltenen optischen Signale in elektrische Signale, diese dem Signal-Dividierglied 29 zuleitet, das seinerseits das Verhaeltnis Schokoladenfilmsignale/Bezugssignale bildet und dieselben in Digitalwerte umformt. Empfehlenswert ist die Erzeugung eines solchen Verhaeltnisses, um Stoerungen durch Lichtschwankungen zu vermeiden, so dass das Verhaeltnis Signal/Stoerung durch die Technik der Digitalfiltrierung ebenfalls verbessert wird. Der so erhaltene Signalwert wird dem Vergleichsglied 30 zugefuehrt, durch welches der Vergleich zwischen diesen Signalen und dem an der Handeinstellvorrichtung 31 Bedienungsmann manuell voreingestellten Wert, der der gewuenschten Betriebsart bzw. der ausgewaehlten Dicke des abgelieferten Schokoladenfilms 27 entspricht, durchgefuehrt wird. Wenn die miteinander im Vergleichsglied 30 zu vergleichenden Werte uebereinstimmen, bedeutet das, dass die Dicke des Schokoladenfilms 27 und der erwuenschte Nennwert identisch sind. Wenn sich hingegen die zwei Signale untereinander unterscheiden, dann wird ein Signal abgegeben, das ueber den Digital/Analog--Wandler 32 Steuersignale liefert, welche auf die Steuerorgane 8 und, indirekt, auf die Stellelemente 7, d. h. auf die Regelelemente 2c, 6c mit Rueckwirkung auf das Paar der entsprechenden Zufuehrwalzen 2, 3 regelnd wirken. Ist die mittelbare gemessene Dicke kleiner als die eingestellte Nenndicke, wird der Lagerdruck dieser Zufuehrwalzen verkleinert, damit eine groessere Schokoladenmenge in die Raffiniermaschine eingezogen wird, was eine Dickenzunahme des ausgetragenen Schokoladenfilms zur Folge hat. Bei Messung von zu hohen Dicken wird hingegen eine Vergroesserung des Walzenlagerdrucks bewirkt, mit darauffolgender Verminderung der austretenden Schokoladenmenge und daher mit einer kleineren Dicke des abgelieferten Schokoladenfilms. Die Regelsignale koennen beliebig benutzt werden; beispielsweise koennen sie auch zum Eingreifen in den Druck von anderen Lagern der Raffiniermaschinenwalzen, je nach dem jeweiligen System zum Eingreifen in den Lagerdruck der Raffiniermaschinenwalzen, eingesetzt werden.

Bei der automatischen Betriebsweise mit Mikroprozessor 33 (siehe Fig. 3) wird dieser zwischen dem Signal-Dividierglied 29 und dem Signal-Vergleichsglied 30 einerseits und der erwaehnten Tastatur 34 andererseits eingeschaltet; wobei diese letztere wiederum mit der Handeinstellvorrichtung 31 verbunden ist. Nach Umformung der vom optisch-elektrischen Umsetzer 13 ankommenden Signale in Digitalsignale und deren Verarbeitung durch den Mikroprozessor 33, werden sie im Vergleichsglied 30 mit dem vom Bedienungsmann an der Handeinstellvorrichtung 31 voreingestellten Wert verglichen, der der gewuenschten Dicke des Schokoladenfilms 27 entspricht. Wenn der vom Dividierglied 29 ankommende Wert und der an der Handeinstellvorrichtung 31 voreingestellte Wert identisch sind, wird ein elektrisches Signal abgegeben, das durch die Tastatur 34 in den Mikroprozessor 33 eingegeben wird. Von diesem Zeitpunkt an wird die Maschine selbsttaetig funktionieren, indem sie dem Mikroprozessor 33 und den kolorimetrischen/elektronischen Signalen des Lesekopfs 10 direkt unterstellt und von diesen gesteuert wird. Die Endverarbeitung in Drucksteuersignale der verarbeiteten Signale erfolgt in der gleichen Weise wie bei der Handregelung oben beschrieben. Die Ausfuehrung mit Mikroprozessor ermoeglicht, mehrere Werte, die sich auf die Farben und, indirekt, auf die gewuenschten Dicken beziehen, zu speichern und demnach bei der vorgeschlagenen Vorrichtung die Ueberwachung ueber mehrere Raffiniermaschinen, die Schokoladenfilme gleicher Dicke erzeugen, zu zentralisieren. Die Loesung bei manueller Voreinstellung ist jedenfalls mit wesentlich kleineren Herstellungskosten verbunden.

Es sei erwaehnt, dass der an der Tastatur 34 eingestellte Wert einem gewissen, vorgegebenen Wert und somit der diesbezueglichen Feinheit oder Dicke entspricht und dass derselbe gespeichert wird und deshalb mit Vorteil jederzeit wieder verwendet werden kann. Es wird auch moeglich, Bearbeitungskarten zu schaffen, welche die Produktion einer erwuenschten Abstufung von Schokoladenfilmdicken gestatten.

Es sei erwaehnt, dass der von der vorgeschlagenen Vorrichtung auszufuehrende Eingreifvorgang zur Dickenkorrektur vorteilhafterweise innerhalb eines kurzen und vorgegebenen Zeitabschnittes mehrmals und unabhaengig von den Ursachen, die zu Dickenaenderungen bzw. Filmunterbrechungen fuehren, durchgefuehrt wird. Kann die Filmgleichmaessigkeit trotz wiederholten Eingreifens nicht wieder hergestellt werden, so bewirkt diese Massnahme, dass die Raffiniermaschine durch die vorgeschlagene Vorrichtung ausgeschaltet wird, um somit das erwaehnte Walzenfressen mit Sicherheit auszuschliessen. Neben dem Verstellen des Drucks zwischen den Raffinierwalzen zum Erreichen der gewuenschten Dicke des abgelieferten Schokoladenfilms, uebernimmt die Vorrichtung waehrend der Betriebsweise auch die Aufgabe, die Lueckenlosigkeit bzw. Vollstaendigkeit des ausgetragenen Schokoladenfilms kontinuierlich zu ueberwachen.

Neben der oben erwaehnten Verfahrensweise zum Berichtigen von abweichenden Dicken wird nach der Erfindung auch eine hochentwickeltere Eingreifart zum Eingreifen bei Erfassung von "trockenen Bahnen" in der Austragswalze vorgeschlagen.

Bei "trockenen Bahnen" werden sie unverzueglich vom Lesekopf ermittelt, indem er die Oberflaechenfarbe der Austragwalze, d. h. eine Farbe, deren Auswertung und Messung deutlich ausserhalb des zulaessigen Regelbereichs des optischen Lesekopfs liegt, direkt liest. Demzufolge wird der Lesekopf ein besonderes Endwertsignal abgegeben, das in dieser Eingreifvariante wie folgt benutzt wird: In der Zeitspanne zwischen der ersten und der zweiten Ermittlung einer "trockenen Bahn" spricht die Vorrichtung deshalb noch nicht an, weil das die "trockene Bahn" verursachende Festkoerperstueck manchmal ohne irgendein Eingreifen von den Zufuehrwalzen selbst ausgestossen wird. Wird jedoch diese "trockene Bahn" ein zweites Mal ermittelt d. h. beim Ruecklauf des Lesekopfs, , so greift die Vorrichtung dann rechtzeitig ein und reduziert den regelbaren Druck an dem Zufuehrwalzenlager auf das Minimum, d.h. sie bewirkt die groesste Spaltoeffnung der Eingabewalzen, und eventuell auch der anderen Raffinierwalzen , um den Ausstoss der Festkoerperstuecke aus der Raffiniermaschine zu erleichtern. Wird dies trotzdem nach einer kurzen Zeit, die uebrigens voreinstellbar ist, nicht erzielt, so greift die Vorrichtung, wie fuer den einfacheren Betrieb erlaeutert, weiter ein, in dem Sinne, dass die Raffiniermaschine stillgesetzt wird, um ein Walzenfressen der betroffenen Raffinierwalzen zu vermeiden. Die diese zweite Eingreifart ermoeglichende Vorrichtung uebt demzufolge auch eine wirksame Selbstschutzwirkung der Raffiniermaschine aus. Die zu diesem Zweck benoetigten Einrichtungen, wie z. B. Verzoegerungs- und Abschaltmittel sowie vorteilhafterweise visuelle oder akustische Anzeigevorrichtungen usw., sind dabei nicht naeher dargelegt, weil dieselben beliebig ausgewaehlt werden koennen und ohne weiteres dem Fachmann gelaeufig sind.

Aus dem Vorstehenden geht deutlich hervor, dass die der vorliegenden Erfindung zugrunde liegende Aufgabe durch die vorgeschlagene Vorrichtung wirksam geloest und die eingangs erwaehnten Vorteile erreicht werden koennen.

Wesentlich fuer die Erfindung ist die Verwendung einer "Messung" der Dicke des Schokoladenfilms, die indirekt bzw. mittelbar, d. h. durch eine Messung der Filmfarbe erfolgt, um die Raffiniermaschinenrollen derart zu regeln, dass die Nenndicke dieses Schokoladenfilms erreicht bzw. erhalten wird. Ebenso wesentlich ist es, einen Lesekopf, der laengs der Laenge der Austragwalze hin- und herbewegbar ist, vorzusehen.

In der Praxis koennen alle Einzelteile durch weitere in technischer und/oder funktioneller Hinsicht gleichwertige Einzelteile ersetzt werden. Beispielsweise ist es ohne weiteres moeglich, den Kolorimeter durch weitere aehnliche Einrichtungen zu ersetzen, die z. B. statt der Malteserkreuzscheibe eine alternierend beweglich gelagerte Bezugsfarbenplatte aufweisen usw., ohne dadurch den Rahmen der vorliegenden Erfindung zu verlassen.

Ebenso liegt im Rahmen der vorliegenden Erfindung die Ersetzung der Verarbeitungsteile, d. h. der erwaehnten Steuervorgaenge und Umsetzer durch weitere in funktioneller Hinsicht aequivalente Einrichtungen, wobei fuer die Erfindung der Begriff der Verarbeitung der zur Erzeugung der Eingreifdruckregelsignale erhaltenen kolorimetrischen Signale wesentlich bleibt.

Obwohl Dicken von 15 bis 30 $\mu$m erwaehnt wurden, ist es klar, dass die vorgeschlagene Vorrichtung auch bei Dicken, die von den angegebenen abweichen, sowie auf anderen Maschinen einsetzbar ist, weiterhin in anderen Industriezweigen, wo dieselbe zu loesende Aufgabe besteht, wie z. B. im Gebiet von Anstrichstoffen, Tinten u. dgl.

Alle in der Beschreibung, den Anspruechen und den Zeichnungen dargestellten Merkmale und Einzelheiten koennen sowohl einzeln als auch in beliebiger Kombination miteinander wesentliche Bedeutung haben.

Carle & Montanari S.p.A.

Via Neera 39

20141 Mailand / Italien

Patentansprueche

1. Vorrichtung zur Regelung sowie Ueberwachung der Schokoladen- filmdicke bei Schokoladenraffiniermaschinen, dadurch gekenn- zeichnet, dass sie folgende Mittel umfasst:

- Erfassungsmittel (12), die faehig sind, die kolorimetrischen Signale des ausgetragenen Schokoladenfilms (27) zu ermitteln;

- Umformungsmittel (13), die faehig sind, obige kolorimetrische Signale in digital verarbeitbare Signale zu verwandeln;

- Einstellmittel (31)zum Einstellen von Bezugssignalen, die elektronisch verarbeitbar sind und entsprechende Dicken-Nennwerte des ausgetragenen Schokoladenfilms (27) darstellen, sowie

- Verarbeitungs- und Vergleichsmittel (29, 30) zum Vergleichen der aus den kolorimetrischen Signalen verarbeiteten Signale mit den einstellbaren Bezugssignalen, wobei die Verarbeitungs- und

2

0123015

Vergleichsmittel (29, 30) faehig sind, Ausgangssignale abzugeben, die als Eingreif- bzw. Steuersignale im Regelkreislauf der seitlichen Lager der Maschinenraffinierwalzen (2-6) Verstellungen dieser Raffinierwalzen (2-6) veranlassen, welche Verstellungen die gegenueber dem eingestellten Nennwert gegebenenfalls eintretenden Dickenabweichungen des ausgetragenen Schokoladenfilms (27) kompensieren.

2. Vorrichtung nach Anspruch 1, dadurch gekennzeichnet, dass die Erfassungsmittel (12) zur Ermittlung von kolorimetrischen Signalen des abgelieferten Schokoladenfilms (27) aus einer kolorimeterartigen Einrichtung (12) besteht, waehrend die Mittel (13), die die kolorimetrischen Signale in verarbeitbare Signale umformen , aus einem optisch-digitalen Umsetzer (13) bestehen, dem alternierende Folgen von kolorimetrischen Signalen der augenblicklichen Farbe des abgelieferten Schokoladenfilms (27) und von einer Bezugsfarbe zugefuehrt werden.

3. Vorrichtung nach Anspruch 1 und 2, dadurch gekennzeichnet, dass der kolorimeterartige Lesekopf (10) auf Transportmitteln (28) gelagert ist, die entlang der Breite der Schokoladenfilm-Austragwalze (6) hin- und herbeweglich sind, um die augenblickliche Farbe ueber die gesamte Breite dieses ausgetragenen Schokoladenfilms (27) abzutasten, d. h. rechtzeitig das Vorhandensein von gegebenenfalls eintretenden "trockenen Bahnen" auf der Austragwalze (6) bzw. Luecken im Schokoladenfilm (27) zu ermitteln.

4. Vorrichtung nach den vorhergehenden Anspruechen, dadurch gekennzeichnet, dass die Verarbeitungs- und Vergleichsmittel (29, 30) aus einem Dividierglied (29), das zum Erzeugen von Verhaeltnissen zwischen den beiden vom Umsetzer (13) ankommenden Signalfolgen dient, sowie aus einem Vergleichsglied (30) bestehen, das dazu dient, einen Vergleich zwischen den vom Dividierglied (29) herruehrenden Signalen und einem Bezugswert durchzufuehren, wobei der Bezugswert von einem Bedienungmann in einer Handeinstellvorrichtung (31) zur Einstellung von vorgegebenen und die gewuenschten Nenndicken darstellenden Werten eingestellt werden kann, und dass die vom obigen Vergleichsglied (30) abgegebenen Ausgangssignale als Regelsignale dienen, welche direkt bzw. indirekt auf die Regelvorrichtungen (8) wirken, die in der Steueranlage zum Verstellen des Walzenlagerdrucks der Raffiniermaschinenwalzen (2-6) vorgesehen sind.

5. Vorrichtung nach einem oder mehreren der Ansprueche 1 bis 3, dadurch gekennzeichnet, dass eine zentralisierte Funktionsweise dadurch erreicht wird, dass ein Mikroprozessor (33) zwischen dem Dividierglied (29) zum Erzeugen von Verhaeltnissen zwischen vom Umsetzer (13) kolorimetrische/verarbeitbare Signale ankommenden Signalfolgen einerseits, und dem Vergleichsglied (30) andererseits, eingeschaltet ist, wobei diesem Mikroprozessor (33) ueber eine zwischengeschaltete Tastatur (34) ein Ausgang der Handeinstellvorrichtung (31) zugefuehrt wird, die (31) dazu dient, Einstellwerte, die die voreingestellten Nenndicken darstellen, manuell einzugeben.

6. Vorrichtung nach einem oder mehreren der vorhergehenden Ansprueche, dadurch gekennzeichnet, dass zwischen dem Vergleichsglied (30) zum Vergleichen der verarbeiteten Signale mit dem Einstellsignal einerseits, und den durch die erzeugten Steuersignale steuerbaren Einrichtungen (8) andererseits, ein Wandler bzw. ein Signalverstaerker zwischengeschaltet angeordnet wird.

7. Vorrichtung nach einem oder mehreren der vorhergehenden Ansprueche, dadurch gekennzeichnet, dass dieselbe eine Verzoegerungseinrichtung umfasst, die faehig ist, die maximale Zeit zur Ausfuehrung der Eingreifvorgaenge zum Regeln der Reibwalzen (2 - 6) der Walzenreibmaschine zu bestimmen, wobei bei sich vom Nennwert andauernd abweichenden Filmdickenwerten oder bei Filmluecken, die ueber die genannte vorbestimmte Zeitspanne hinaus weiter dauern, das Stillsetzen der Walzenreibmaschine veranlasst wird.

8. Vorrichtung nach einem oder mehreren der vorhergehenden Ansprueche, dadurch gekennzeichnet, dass sie Schaltungs- und Wirkungsmittel umfasst, die bei Ermitteln von "trockenen Bahnen" auf der Austragwalze (6) eine Bewegung zur maximalen Verminderung des Drucks bei den Lagern der dem Eingabewalzenpaar (2, 3) gehoerigen, regelbaren Reibwalze (2), sowie vorzugsweise auch bei den Lagern der weiteren Raffinierwalzen (4, 5, 6) bewirken, um den Ausstoss der Festkoerperstuecke, die die "trockenen Bahnen" erzeugen, sowie nach einer voreinstellbaren Zeitspanne bei Anhalten der ermittelten "trockenen Bahnen" auch das Stillsetzen der Raffiniermaschine veranlassen.

9. Vorrichtung nach einem oder mehreren der vorhergehenden Ansprueche, dadurch gekennzeichnet, dass ein Umschalter vorgesehen ist, der faehig ist, die verarbeiteten Steuersignale, die den Druck der Raffinierwalzenlager verstellen, an die eine oder an die andere Seite des jeweils vorgesehenen Regelsystems weiterleiten, je nachdem die ermittelten Dicken- bzw. kolorimetrischen Werte vom Nennwert entlang der rechten oder linken Haelfte der Laenge gegenueber der Mitte der Raffiniermaschine abweichen.

10. Vorrichtung nach einem oder mehreren der vorhergehenden Ansprueche, dadurch gekennzeichnet, dass der kolorimeterartige Lesekopf (10, 12) eine Lichtquelle (18) sowie eine Scheibe (15) umfasst, die in Form eines Malteserkreuzes zum Durchgang der Lichtstrahlung durch seine Oeffnungen hindurch ausgebildet ist und auf seiner unteren Oberflaeche eine Bezugsfaerbung, z.B. eine mittlere Schokoladenfarbe aufweist und Antriebsmitteln (16, 17) zur Rotationsbewegung zugeordnet ist, und dass der seitliche Abschnitt (24) des Lesekopfes (10, 12) zur Abfuehrung der kolorimetrischen Signale eine Linse (25) und einen Filter (26) aufnimmt.

5

0123015

11. Vorrichtung nach einem oder mehreren der vorhergehenden Ansprueche, dadurch gekennzeichnet, dass die Steuersignale zum Verstellen des Drucks bei den Reibwalzenlagern (2 - 6) der Raffiniermaschine auf die Lager einer (2) der zwei Reibwalzen (2, 3) des Eingabewalzenpaars fuer die Schokoladenmasse wirken.

12. Vorrichtung nach einem oder mehreren der Ansprueche 1 bis 10, dadurch gekennzeichnet, dass die Steuersignale zum Verstellen des Drucks bei den Reibwalzenlagern (2 - 6) der Raffiniermaschine nicht nur auf die Lager einer Reibwalze (2) des Eingabewalzenpaars (2, 3), sondern auch auf die Lager einer oder mehrerer der anderen Raffinierwalzen (4, 5, 6) wirken koennen.

13. Vorrichtung nach einem oder mehreren der vorhergehenden Ansprueche, dadurch gekennzeichnet, dass der Mikroprozessor (33), der in der Verarbeitungsanlage (9) zum Verarbeiten der abgelesenen Signale der augenblicklichen Dicke in Abhaengigkeit von der wirklichen Messung der augenblicklichen Farbe des abgelieferten Schokoladenfilms (27) enthalten ist, mit einem Steuercomputer zur gleichzeitigen Steuerung von mehreren Raffiniermaschinen verbunden ist.

·14. Schokoladenraffiniermaschine, dadurch gekennzeichnet, dass sie mit einer Vorrichtung (10, 12) ausgeruestet ist, die eine indirekte Ablesung der Dicke des abgelieferten Schokoladenfilms (27) sowie eine Ueberwachung ueber die Lueckenlosigkeit desselben und die Verarbeitung der erzeugten Signale, um dieselben in Steuersignale zur Regelung umzuwandeln, ermoeglicht, gemaess einem oder mehreren der vorhergehenden Ansprueche.

FIG.1

0123015

FIG.2

DRUCKLUFT

0123015

FIG.3

DISPLAY — 35

AUTOMATISCH

MANUELL

DRUCKLUFT

DRUCKLUFT

FIG.4

0123015

DRUCKLUFT

FIG.5